## Europäisches Patentamt
## European Patent Office
## Office européen des brevets

(19)

(11) Publication number: **0 033 801**
**B1**

# EUROPEAN PATENT SPECIFICATION

(45) Date of publication of patent specification: **04.07.84**

(51) Int. Cl.³: **B 01 D 47/10**

(21) Application number: **80304038.5**

(22) Date of filing: **12.11.80**

(54) **Scrubber utilizing wetted screens.**

(30) Priority: **13.11.79 US 93462**

(43) Date of publication of application:
**19.08.81 Bulletin 81/33**

(45) Publication of the grant of the patent:
**04.07.84 Bulletin 84/27**

(84) Designated Contracting States:
**BE DE FR GB IT NL**

(56) References cited:
**DE - A - 1 444 480**
**DE - A - 1 932 867**
**GB - A - 590 998**
**US - A - 2 046 458**
**US - A - 2 709 580**
**US - A - 3 375 058**
**US - A - 3 599 398**
**US - A - 3 925 040**

(73) Proprietor: **UOP Inc.**
**10 UOP Plaza Algonquin & Mt. Prospect Roads**
**Des Plaines Illinois 60016 (US)**

(72) Inventor: **Vesel, Lawrence Mathew**
**105 Stone Mountain Drive**
**Conroe Texas (US)**

(74) Representative: **Newby, John Ross et al,**
**J.Y. & G.W. Johnson Furnival House 14/18 High**
**Holborn**
**London WC1V 6DE (GB)**

Courier Press, Leamington Spa, England.

## Description

This invention relates to the removal of particles from a gas and particularly to a scrubber of the type which wets the particles and carries them away in a flow of water. One example of a type of scrubber which is widely used for collecting flyash from a municipal sludge incinerator is a venturi scrubber which uses a scrubber chamber approximately 10 metres high and 2.5 metres in diameter containing 12 spray nozzles which spray the gas with a total of about 375—450 litres/minute of water. A fan rotating at about 650 rpm sucks the flue gas through the scrubber chamber at about 700 cubic metres/minute (25,000 CFM) and utilizes about 22.4 KW (30 BHP) to move the gas and overcome a pressure drop of about 7 to 7.6 cm (2.8—3.0 inches) of water in the chamber. The pressure drop is introduced mainly by the fact that the inlet gas is channeled through a narrow restriction of about 6.4 sq. dm (0.69 square feet) at the end of a square section inlet pipe having a cross-sectional area of 70 sq. dm (7.56 square feet). The restriction increases the gas velocity and causes it to swirl upwardly around the side wall of the chamber which is constantly sprayed with a high pressure spray of water. Collision of the water droplets with the flyash particles wet the particles and cause them to move outwardly against the wall by centrifugal force and then flow down the water-washed wall to a drain where they are carried away and usually mixed in with the sludge being burned. The large volume of water required entails a significant cost in its own right in addition to enhancing corrosion conditions at the suction fan. Although it is known that particles are easier to collect as their velocity decreases, the venturi scrubber must greatly increase their velocity to cause them to concentrate near the wetted wall of the chamber. Electrostatic precipitators are not a feasible alternative, due to their cost, and use of dust-collecting bags would present too high a pressure drop even if a fabric could be found for the bags which would withstand the temperature of the flue gases. US—A—3599398 discloses a scrubber in which a canister, closed at its upper end and providing a plurality of gas-flow apertures therein, is located in a chamber and is sprayed from within and from below with a washing liquid to entrain particles from the gas, also entering the canister from below, as the gas passes radially outwards through the apertures into the chamber. Each aperture is shaped to provide a minimum cross-section between its inlet and outlet ends, and produces an acceleration of the gas flow as it passes through each aperture. DE—A—1932867 also discloses gas scrubbing apparatus in which scrubbing liquid is sprayed upwardly into the open bottoms of inverted canisters to pass co-current with the gas to be scrubbed into the canisters. The canister walls are perforated to allow radial outflow of gas through the walls, the gas exiting from each canister being further contacted by liquid sprayed down on the outside of the canisters. The perforations in the preferred form of canister wall are such as to provide a minimum cross-section between its inlet and outlet ends and again produce an acceleration of the gas as it flows through the wall. A relatively high static pressure drop occurs across the wall by virtue of the tortuous path provided for gas flow through the perforations.

According to the present invention there is provided a scrubber for removing flyash or other particulate matter from a stream of gas, comprising a chamber having an inlet for particle-containing gas adjacent to one end and an outlet for clean gas adjacent to its opposite end, a mounting plate disposed generally horizontally in said chamber; said mounting plate having a plurality of apertures therein, each said aperture communicating with a generally cylindrical canister whose side wall(s) define(s) a screen body having a series of vertically arranged, generally horizontal slots and spray means to introduce liquid droplets into the canister to remove the particulate matter from the gas flowing through the chamber, the mounting plate being disposed intermediate said ends of the chamber and means being provided for directing the gas flow through the slots in the side wall(s) of each canister, the spray means comprising a plurality of spray nozzles adapted to direct a pattern of liquid spray against said screen bodies to wet said screen bodies, characterised in that each canister extends downwardly from its respective aperture below the respective spray means so that in use of the scrubber a substantial part of the gases flowing within the chamber pass upwardly around the outside of the side walls of the canisters, then change direction, firstly to move inwardly of the canisters to enter the slots in said screen bodies of the canisters, and secondly to leave the slots and pass counter-current to said liquid spray while moving upwardly within said canisters.

In a preferred embodiment of scrubber according to the invention the screen body of each canister has its lower end either closed or formed of a lower screen portion which is shielded from below by a baffle plate and has a flange at its upper end which engages the upper surface of the mounting plate surrounding the aperture in which the canister hangs. The screen body of each canister is preferably of the type described in US—A—2,046,458 wherein a wire of special cross-section is helically wrapped around a plurality of support rods to which it is welded at every intersection between the wire and a rod.

In one embodiment of scrubber according to the invention, nine screen canisters each 61 cm long and 61 cm in diameter were mounted in nine apertures in a mounting plate some 2.44 metres in diameter positioned in the chamber of an existing venturi type scrubber. In this embodiment, a slot-forming wire was 1.5 mm (0.060") wide by 3.15 mm (0.124") deep was used for the screen body and was welded to 3.96 mm (0.156") wide, "teardrop" shaped rods so as to form a continuous, helical slot having a width of 0.76 mm (0.030"). The resulting open area in all the screen bodies was about 334 sq. dm (37 square feet) as compared to the approximately 70 sq. dm (7.56 square feet) area of the inlet pipe to the venturi scrubber chamber which had its restrictive orifice removed. A spray nozzle, positioned about 30 cm above the centre of each canister, sprays a conical pattern of water droplets into each canister to wet the screen body and flow down over it to carry captured particulate matter downwardly where it can be carried through the lowest slot and fall over the edges of a plate closing the lower end of each canister and thus into a drain at the bottom of the chamber. Each nozzle used was a "Spraco" (Trade Mark) part number 11—9221—11 which produced a 93° spray angle and was rated at 38.5 litres/minute at 6.4 atm water pressure (6.48 bar). The very large open area of the slots in the screen bodies compared to the area of the inlet pipe of the unmodified scrubber causes a considerable reduction in velocity of the gases and enhances the ease with which particles entrained therein may be wetted and collected. Furthermore, the closed bottoms of the array of spaced canisters causes much of the gas to change its flow direction to enter the spaces between the canisters and then, because of the substantial horizontal depth of the slot-forming wires, all the gas must make almost a 90° turn to pass through the slots and into the interior of the canisters. These direction changes further reduce the velocity of the particulate matter and additionally enhance its ability to be wetted and collected by the wet screen bodies. As the gas stream changes direction inside the canisters and heads for their open upper ends, it is further contacted by the spray of droplets through which it must pass.

In the aforementioned actual use, the total water usage in the nine spray nozzles was cut from the 450—750 litres/minute normally used by the venturi scrubber to about 320 litres/minute using main water at a pressure of about 4.2 kg/cm² (4.14 bar; 60 psi). The pressure drop through the chamber was reduced from about 11.5 cm of water common with a venturi scrubber to 1.27—2.5 cm of water.

Where an even greater percentage of particles must be removed, a second set of canisters can be installed upside down above the first set. These upper canisters, which would also each be internally wetted from a spray nozzle, cause further direction changes for the gases and can be made with smaller size slots to increase the percentage of remaining particles which is contacted. Efficiency can possibly be further improved by various means such as containing the flow of effluent from the bottom of the (lower) cannisters by causing it to flow to the drain around a wire or within a pipe, for example, to minimize re-entrainment of already collected particles. Additional improvement might be expected by optimizing the wire shape, the slot width, the spray pattern, and the droplet size in accordance with anticipated operating conditions.

The invention will now be further described, by way of example, with reference to the accompanying drawing, in which:—

Figure 1 is a partially sectioned side view of a scrubber in accordance with the invention,

Figure 2 is a section on the line 2—2 of Figure 1, and

Figure 3 is an isometric view of one screen canister from the scrubber of Figure 1 which is partially broken away and sectioned for clarity.

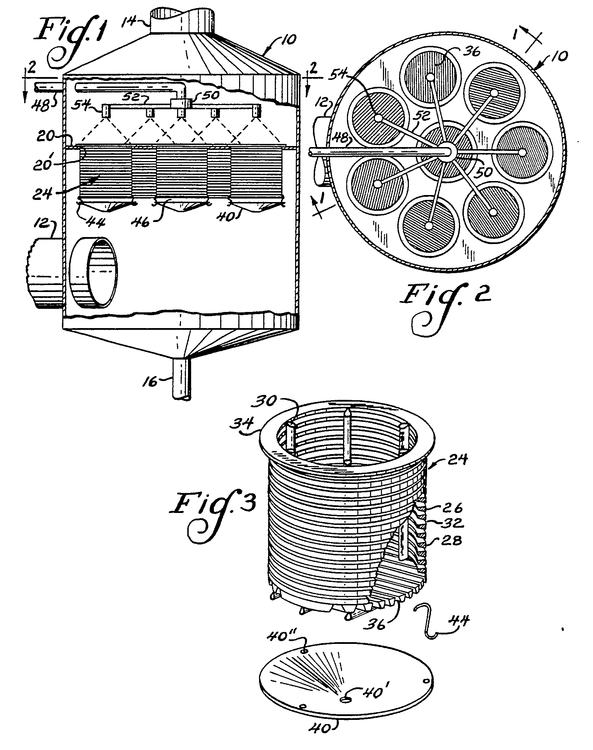

In Figure 1, a scrubber chamber indicated generally at 10 is shown as having a particle-containing flue gas inlet duct 12 entering the chamber near its bottom. At the top of the chamber 10 a gas outlet duct 14 is provided for discharging the scrubbed flue gas to a stack or to the atmosphere. The lowest portion of the chamber 10 has a drain plug 16 attached to it so that the water utilized in the scrubbing process and the particulate matter captured therein can be removed from the chamber. Positioned transversely of the chamber 10 is a mounting plate 20 having eight apertures 20' therein for accommodating a like number of canisters 24.

One canister 24 is illustrated more clearly in Figure 3 and comprises a cylindrical body 26 which, in the embodiment shown, is formed by helically wrapping a wire 28 of tapered cross-section about a plurality of rod members 30 of "teardrop" cross-section disposed with their narrow side facing outwardly. The wire 28 is preferably welded at each of its junctions with the rod members 30 so as to define a plurality of equally spaced, generally horizontal slots 32 through which the gases to be purified are passed. Because of the tapered shape of the wire 28 each slot widens in the direction towards the axis of the canister 24 so that minimum width of each slot 32 is on its inlet side. The screen body 26 can be formed in a conventional manner such as that disclosed in US—A—2,046,457. The screen body 26 is fixed (e.g. welded) to an annular support flange 34 which permits each canister 24 to be lowered through an aperture 20' and retained therein by contact of the flange 34 with the mounting plate 20. The canister 24 is shown as being provided with a flat lower screen portion 36. The flat screen portion 36 can be prepared by winding the wire 28 into a cylindrical screen, cutting the cylinder along a line parallel to its axis and then flattening it to form a flat screen surface which can then be cut to the desired shape. Positioned directly under the lower screen portion 36 is a dish-shaped baffle plate 40 which preferably has a diameter slightly greater than the diameter of the screen body 26. The baffle plate 40 is shown as having a drain hole 40′ in its centre and at least three small apertures 40″ adjacent to its periphery. The small apertures 40″ are engaged by hook members 44 which pass through them and also through slots adjacent to the bottom of the screen body 26, to suspend the baffle plate 40 a slight distance below the lower edge of the screen body 26. The drain hole 40′ is preferably made of as small a diameter as possible to accommodate all of the water and collected particles which drain from the screen body 26 and pass through the lower screen portion 36. By keeping the hole 40′, and thus the resulting stream of effluent, of relatively small diameter, there will be very little opportunity for the particulate matter in the stream to be re-entrained in the hot flue gas through which the steam is falling. By providing the baffle plate 40 with a slightly larger diameter than that of the screen body 26 (e.g. between 1 and 2 cm greater diameter), the liquid and collected particles dripping down from the lower edge of the screen body 26 is more likely to fall into the baffle plate 40 rather than be re-entrained by the flue gases. The presence of the baffle plate 40 ensures that any gases which do not pass through the space 46 between the baffle plate 40 and the lower screen portion 36 will undergo a substantial change in direction before entering the inside of the screen body 26 and thus will tend to lower the velocity of the gases and facilitate the removal and collection of the particulate matter therein. If desired, the lower screen portion 36 could be replaced with a continuous plate with the result that the water and collected particulate matter inside the screen body 26 would have to exit through the lowest slots 32. Such a construction, with or without a baffle plate 40, would still allow the upwardly flowing gases to change direction as they pass through the screen slots 32 but would present a greater opportunity for slot blockage over time than would the arrangement shown in the drawing wherein a slotted lower screen portion 36 is used. When a screen body 26 having a diameter of approximately 60 cm is utilized, a sizing of the hook members 44 to provide for a space 46 of approximately 2.5 cm between the bottom of the screen body 26 and the top edge of the baffle plate 40 should be satisfactory. Likewise, an extension of the top edge of the baffle plate 40 about 2.5 cm above the bottom of the screen body 26 should also be satisfactory as should a baffle plate cone angle of about 20° relative to the horizontal as is shown in Figure 1.

The water used for the scrubbing process enters the scrubber chamber 10 through a water inlet pipe 48 which is connected to a distributor fitting 50. A plurality of spray head support pipes 52 connect the distributor fitting 50 to a plurality of spray nozzle 54 which preferably overlie the array of canisters 24 and are positioned one on each axis thereof so that each cone of spray will wet the entire inner wall of its associated screen body 26 near the top thereof and flow downwardly over the surface wire 28 so as to wet the same. The spray from the spray nozzles 54 should also constantly traverse the upper ends of the screen bodies 26 so that any particulate matter which escapes being collected in the water flowing over the surfaces of the wire 28 as the flue gas passes through the slots 32 or the slots in the lower screen portion 36 will be forced into contact with the water spray before it exits from the scrubber chamber 10.

Although eight canisters 24 are shown in Figure 2, it will be appreciated that more or less than this can be provided. Although the slots 32 are formed between turns of a continuously helically wrapped wire 28 in the embodiment described, it will be appreciated that other constructions are possible for the screen body 26.

Suitably the cross-section of the wire 28 is such that it has a dimension in the radial direction of the screen body 26 of at least 2.5 mm and a dimension in the axial direction of the screen body 26 of no greater than 65% of its radial dimension.

## Claims

1. A scrubber for removing flyash or other particulate matter from a stream of gas, comprising a chamber (10) having an inlet (12) for particle-containing gas adjacent to one end and an outlet (14) for clean gas adjacent to its opposite end, a mounting plate (20) disposed generally horizontally in said chamber (10); said mounting plate (20) has a plurality of apertures (20′) therein, each said aperture (20′) communicating with a generally cylindrical canister (24) whose side wall(s) define(s) a screen body (26) having a series of vertically arranged, generally horizontal slots (32) and spray means (54) to introduce liquid droplets into the canister (24) to remove the particulate matter from the gas flowing through the chamber (10), the mounting plate (20) being disposed intermediate said ends of the chamber (10) and means (12) being provided for directing the gas flow through the slots (32) in the side wall(s) of each canister (24), the spray means (54) comprising a plurality of spray nozzles adapted to direct a pattern of liquid spray against said screen bodies to wet said screen bodies (26), characterised in that each canister (24) extends downwardly from its respective aperture (20′) below the respective spray means so that in use of the scrubber a substantial part of the gases flowing within the chamber (10) pass upwardly around the outside of the side walls of the canisters (24), then change direction, firstly to move inwardly of the canisters to enter the slots (32) in said screen bodies (26) of the canisters (24), and secondly to leave the slots (32) and pass counter-current to said liquid spray while moving upwardly within said canisters.

2. A scrubber as claimed in claim 1, characterised in that the screen body (26) of each canister (24) is formed from circumferentially arranged wraps of wire (28) which are integrally attached to a plurality of vertically positioned rod members (30).

3. A scrubber as claimed in claim 2, characterised in that said wraps of wire (28) in each said canister (24) comprise a single length of helically coiled wire.

4. A scrubber as claimed in claim 2 or 3, characterised in that the wire (28) forming said wraps has a dimension in the radial direction of the canister (24) of at least 2.5 mm and a dimension in the axial direction of the canister (24) of no greater than 65% of its radial dimension.

5. A scrubber as claimed in any of claims 2 to 4, characterised in that said wraps of wire (28) have a profile such that the slots (32) formed thereby are tapered so as to have their minimum width on their inlet side.

6. A scrubber as claimed in any preceding claim, characterised in that a baffle plate (40) is suspended below the screen body (26) of each cylindrical canister (24), said baffle plate (40) serving to deflect upwardly moving gas around the sides of said screen body (26).

7. A scrubber as claimed in claim 6, characterised in that said baffle plate (40) has a dish-like shape with a hole (40') in its centre for permitting liquid falling on said plate (40) from the screen body (26) to fall downwardly in a coherent stream through the portion of the chamber (10) positioned below the plate (40).

8. A scrubber as claimed in claim 6 or claim 7, characterised in that said baffle plate (40) extends radially outwardly of said screen body (26).

9. A scrubber as claimed in claim 8, characterised in that said baffle plate (40) extends between 1 and 2 cm radially outwardly of said screen body (26) and has its upper, outer edge suspended no more than 2.5 cm below the bottom of the screen body (26).

10. A scrubber as claimed in any preceding claim, characterised in that each cylindrical canister (24) includes a slotted lower screen portion (36) disposed below the screen body (26).

**Revendications**

1. Un scrubber pour l'élimination de cendres volantes ou d'autres particules de matière contenues dans un courant gazeux, comprenant une chambre (10) ayant une entrée (12) pour les gaz contenant les particules proches d'une extrémité et une sortie (14) pour les gaz purifiés proches de l'extrémité opposée, une plaque de montage (20) disposée d'une manière généralement horizontale dans ladite chambre (10), ladite plaque de montage (20) présentant plusieurs ouvertures (20'), chacune des dites ouvertures (20'), communiquant avec une boîte métallique (24) de forme généralement cylindrique, dont la ou les parois laterale(s) définisse(nt) un élément de tramis (26) présentant une série de fentes (32) généralement horizontales et disposées en rangées verticales et des dispositifs d'arrosage (54) permettant d'introduire des gouttelettes de liquide dans la boîte métallique (24) afin d'éliminer les particules de matière contenues dans les gaz coulant par la chambre (10), la plaque de montage (20) étant disposée entre lesdites extrémités de la chambre (10) et des dispositifs (12) étant prévus pour faire passer l'écoulement gazeux par les fentes (32) dans la ou les parois laterale(s) de chaque boîte métallique (24), les dispositifs d'arrosage (54) comprenant plusieurs tuyères d'arrosage conçues pour envoyer un jet liquide de forme déterminée sur lesdits éléments de tamis, afin de mouiller lesdits élément de tamis (26), caractérisé en ce que chaque boîte métallique (24) s'étend vers le bas depuis son ouverture correspondante (20') en-dessous du dispositif d'arrosage correspondant de façon à ce que, quand le scrubber est en fonctionnement, une part importante des gaz coulant par la chambre (10) monte autour de l'extérieur des parois latérales des boîtes métalliques (24) puis change de direction, en se déplaçant tout d'abord vers l'intérieur de boîtes métalliques de façon à pénétrer dans les fentes (32) dans lesdits éléments de tamis (26) des boîtes métalliques (24) et à quitter ensuite les fentes (32) et à passer à contre-courant du dit jet de liquide en se déplaçant vers le haut dans lesdites boîtes métalliques.

2. Un scrubber selon revendication 1, caractérisé en ce que l'élément de tamis (26) de chaque boîte métallique (24) est constitué de bobinages de fil (28) disposés circonférentiellement et fixés à demeure à plusieurs éléments de tige (30) disposés verticalement.

3. Un scrubber selon revendication 2, caractérisé en ce que lesdites bobinages de fil (28) dans chacune des dites boîtes métalliques (24) comprennent une seule longueur de fil bobiné en hélice.

4. Un scrubber selon la revendication 2 ou 3, caractérisé en ce que le fil (28) constituant lesdits bobinages a une dimension dans la direction radiale de la boîte métallique (24) égale à au moins 2,5 mm et une dimension dans la direction axiale de la boîte métallique (24) qui n'est pas supérieure à 65% de sa dimension radiale.

5. Un scrubber selon l'une quelconque des revendications 2 à 4, caractérisé en ce que lesdits bobinages de fil (28) présentent un profil tel que les fentes (32) ainsi formées présentent une section en biseau telle que leur largeur minimale se trouve du côté de l'entrée.

6. Un scrubber selon l'une quelconque des revendications précédentes, caractérisé en ce qu'une plaque déflexion (40) est suspendue en-dessous de l'élément de tamis (26) de chaque boîte cylindrique (24), ladite plaque de déflexion (40) servant à dévier la gaz montant autour des parois dudit élément de tamis (26).

7. Un scrubber selon revendication 6, caractérisé en ce que ladite plaque de déflexion (40) a la forme d'une assiette et est pourvue d'une ouverture (40') au centre permettant au liquide tombant sur ladite plaque (40) depuis l'élément de tamis (26) de tomber sous forme d'un courant cohérent à travers la partie de la chambre (10) située en-dessous de la plaque (40).

8. Un scrubber selon l'une des-revendications 6 ou 7, caractérisé en ce que ladite plaque de déflexion (40) s'étend radialement vers l'extérieur dudit élément de tamis (26).

9. Un scrubber selon revendication 8, caractérisé en ce que ladite plaque de déflexion (40) s'étend sur 1 à 2 cm, radialement vers l'extérieur dudit élément de tamis (26) et a son bord supérieur extérieur suspendu à 2,5 cm au maximum en-dessous de la base de l'élément de tamis (26).

10. Un scrubber selon l'une quelconque des revendications précédentes, caractérisé en ce que chaque boîte cylindrique (24) comprend une partie de tamis inférieur (36) pourvue de fentes et disposée en-dessous de l'élément de tamis (26).

**Patentansprüche**

1. Skrubber zum Entfernen von Flugasche oder sonstigen Feststoffteilchen aus einem Gasstrom, bestehend aus einer Kammer (10) mit einem Einlass (12) für teilschenhaltiges Gas neben einem Ende und einem Auslass (14) für reines Gas neben dem gegenüberliegenden Ende sowie einer allgemein horizontal in dieser Kammer (10) angeordneten Befestigungsplatte (20), die in sich eine Mehrzahl Oeffnungen (20') aufweist, wobei diese Oeffnungen (20') jeweils mit einer allgemein zylindrischen Büchse (24) in Verbindung stehen, deren Seitenwand bzw. -wände einen Siebkörper (26) mit einer Reihe von senkrecht angeordneten, allgemein horizontalen Schlitzen (32) und Spritzvorrichtungen (54) zur Einführung von Flüssigkeitströpfchen in die Büchse (24) zur Entfernung der Festoffteilchen aus dem die Kammer (10) durchströmenden Gas begrenzen, wobei die Befestigungsplatte (20) zwischen den besagten Enden der Kammer (10) angeordnet ist und Mittel (12) zur Führung der Gasströmung durch die Schlitze (32) in der Seitenwand bzw. -wänden jeder Büchse (24) vorgesehen sind, wobei die Spritzvorrichtungen (54) aus einer Mehrzahl Spritzdüsen zur Lenkung der Einspritzflüssigkeit in einem Muster auf die Siebkörper (26) zu deren Benetzung bestehen, dadruch gekennzeichnet, dass jede Büchse (24) sich von ihrer jeweiligen Oeffnung (20') unter der entsprechenden Spritzvorrichtung nach unten erstreckt, so dass beim Betrieb des Skrubbers ein wesentlicher Teil der in der Kammer (10) strömenden Gase aufwärts die Aussenseite der Seitenwände der Büchsen (24) umströmt, dann seine Richtung wechselt, um zunächst sich in die Büchsen hinein zum Eintritt in die Schlitze (32) in jenen Siebkörpern (26) in den Büchsen (24) zu bewegen und zweitens aus den Schlitzen (32) auszutreten und während der Aufwärtsbewegung in diesen Büchsen der besagten Einspritzflüssigkeit entgegenzuströmen.

2. Skrubber nach Anspruch 1, dadurch gekennzeichnet, dass der Siebkörper (26) jeder Büchse (24) von auf dem Umfang angeordneten Drahthüllen (28) gebildet wird, die einstückig an einer Mehrzahl senkrecht stehender Stabglieder (30) befestigt sind.

3. Skrubber nach Anspruch 2, dadurch gekennzeichnet, dass diese Drahthüllen (28) in jeder solchen Büchse (24) aus einer einzigen Länge schraubenförmig gewendelten Drahts bestehen.

4. Skrubber nach Anspruch 2 oder 3, dadurch gekennzeichnet, dass der diese Hüllen bildende Draht (28) in der radialen Richtung der Büchse (24) Abmessungen von mindestens 2,5 mm und in der axialen Richtung der Büchse (24) Abmessungen, die 65% der radialen Abmessung nicht übersteigen, aufweist.

5. Skrubber nach einem der Ansprüche 2 bis 4, dadurch gekennzeichnet, dass diese Drahthüllen (28) ein solches Profil aufweisen, dass die dadurch gebildeten Schlitze (32) sich verjüngen, so dass ihre kleinste Weite auf der Einlassseite liegt.

6. Skrubber nach einem der vorhergehenden Ansprüche, dadurch gekennzeichnet, dass unter dem Siebkörper (26) jeder zylindrischen Büchse (24) ein Leitblech (40) aufgehängt ist, das dazu dient, das aufwärts strömende Gas um die Seiten dieses Siebkörpers (26) herum abzulenken.

7. Skrubber nach Anspruch 6, dadurch gekennzeichnet, das dieses Leitblech (40) eine schalenförmige Gestalt mit einem Loch (40') in seiner Mitte besitzt, damit vom Siebkörper (26) auf dieses Blech (40) abfallende Flüssigkeit in einem zusammenhängenden Strom durch den unter dem Blech (40) liegenden Teil der Kammer (10) nach unten fallen kann.

8. Skrubber nach Anspruch 6 oder 7, dadurch gekennzeichnet, dass sich dieses Leitblech (40) von jenem Siebkörper (26) radial nach aussen erstreckt.

9. Skrubber nach Anspruch 8, dadurch gekennzeichnet dass sich dieses Leitblech (40) zwischen 1 und 2 cm radial auswärts von diesem Siebkörper (26) erstreckt und seine obere Aussenkante nicht mehr als 2,5 cm unter dem Boden des Siebkörpers (26) aufgehängt ist.

10. Skrubber nach einem der vorhergehenden Ansprüche, dadurch gekennzeichnet, dass jede zylindrische Büchse (24) einen unter dem Siebkörper (26) angeordneten, geschlitzen unteren Siebteil (36) einschliesst.

Fig.1

Fig. 2

Fig.3